# EUROPÄISCHE PATENTSCHRIFT

(11) **EP 0 640 253 B1**
(45) Veröffentlichungstag und Bekanntmachung des Hinweises auf die Patenterteilung: **12.03.1997**
(21) Anmeldenummer: 93908806.8
(22) Anmeldetag: 22.04.1993
(51) Int. Cl.: H02J 7/00

(54) **MEHRFACH-LADEGERÄT**
MULTIPLE CHARGING DEVICE
CHARGEUR MULTIPLE

(30) Priorität: 15.05.1992 DE 4216045
(43) Veröffentlichungstag der Anmeldung: 01.03.1995
(73) Patentinhaber: ROBERT BOSCH GMBH, 70442 Stuttgart (DE)
(72) Erfinder: FIEBIG, Armin, D-70771 Leinfelden-Echterdingen (DE)
(86) Internationale Anmeldenummer: DE9300350
(87) Internationale Veröffentlichungsnummer: WO9323905

(56) Entgegenhaltungen:
- EP-A- 0 314 155
- EP-A- 0 470 065
- WO-A-90/15466
- WO-A-93/05560
- US-A- 5 003 244
- US-A- 5 122 722

## Beschreibung

### Stand der Technik

Die Erfindung geht aus von einem Ladegerät mit mehreren Batterieschächten für die Aufnahme von wiederaufladbaren Batterien nach der Gattung des Hauptanspruchs. Ein derartiges Ladegerät, auch als Universal-Ladegerät bekannt, kann beispielsweise NiCd-Batterien mit unterschiedlicher Bauform und Spannung aufnehmen. Allerdings benötigt das Ladegerät mehrere Stunden zum Aufladen der Batterien. Der Ladevorgang wird erst unterbrochen, wenn die aufzuladenden Batterien eine bestimmte Sollspannung erreicht haben. Die lange Ladezeit ist durch einen relativ geringen Ladestrom bedingt. Der geringe Ladestrom ist aber erforderlich, damit die Batterien während des Ladens sich nicht zu sehr erwärmen und dadurch beschädigt werden.

Es ist auch schon ein Schnell-Ladegerät bekannt, bei dem eine Batterie in einigen Minuten aufgeladen werden kann. Um die Batterie vor thermischer Überlastung zu schützen, wird dabei ein relativ aufwendiges Steuerverfahren für den Ladevorgang verwendet, bei dem gleichzeitig durch Messung der Ladespannung und der Batterietemperatur der Ladevorgang überwacht wird. Dieser Steuervorgang ist für eine bestimmte Batterietype optimiert und muß bei einem Wechsel der Batterietype mit einer anderen Kapazität neu abgestimmt werden. Dieser Vorgang ist für den Anwender unerwünscht.

Aus der EP 0 314 155 A2 ist ein Ladegerät bekannt, an das mehrere Batterien über entsprechende Zuleitungen anschließbar sind. Die Batterien werden sequentiell geladen. Batterien, die die geringste Ladung benötigen, werden dabei zuerst geladen. Solche Batterien, die am weitesten Entladen wurden, werden zum Schluß geladen. Dadurch soll z. B. erreicht werden, daß eine Batterie in einer möglichst kurzen Zeit wieder verfügbar ist.

### Vorteile der Erfindung

Das erfindungsgemäße Ladegerät mit den kennzeichnenden Merkmalen des Hauptanspruchs hat demgegenüber den Vorteil, daß der Prioritätsparameter mit einem einfachen Schalter festlegbar ist. Dadurch kann der Ladevorgang auf einfache Weise an vorgegebene Ladeparameter angepaßt werden.

Durch die in den Unteransprüchen aufgeführten Maßnahmen sind vorteilhafte Weiterbildungen und Verbesserungen des im Hauptanspruch angegebenen Ladegerätes möglich. Eine besonders schnelle Aufladung aller Batterien ergibt sich, wenn die Batterien vom Ladegerät gleichzeitig versorgt werden und so lange geladen werden, bis die Steuerung das Überschreiten eines Grenzwertes feststellt. Ist beispielsweise eine Batterie während des Aufladens zu warm geworden, dann wird sie zeitweise abgeschaltet, bis ihre Temperatur unterhalb des Grenzwertes gesunken ist. Danach kann sie wieder eingeschaltet werden, bis ihre Ladespannung erreicht ist.

Günstig ist weiterhin, daß ein Batterieschacht abgeschaltet oder übersprungen wird, wenn sich in ihm keine aufzuladende Batterie befindet. Dadurch wird der gesamte Ladevorgang verkürzt.

Die Überwachung der Batteriespannung oder der Batterietemperatur ist deswegen erwünscht, weil bei Überschreiten entsprechender Grenzwerte die Batterie geschädigt werden kann. Da eine NiCd-Batterie insbesondere bei hoher Temperatur zu gasen anfängt, kann der entstehende Innendruck die Batterie sprengen. Es ist daher besonders vorteilhaft, insbesondere beim Schnelladen, die Batterietemperatur zu überwachen.

Ein Vorteil ist auch darin zu sehen, daß das Ladegerät als kompaktes Taschengerät ausgebildet ist. Dadurch ist es leicht portabel, wie die Batterie selbst.

Eine günstige Ausgestaltung der Erfindung ergibt sich durch die Anordnung einer Anzeige zu jedem Batterieschacht. Eine derartige Anzeige, die als LCD-Anzeige oder LED-Anzeige ausgebildet ist, benötigt wenig Strom und gibt dem Benutzer des Ladegerätes einen sofortigen Hinweis über den Ladezustand bzw. die Parameter der Batterie.

Das Ladegerät ist besonders für NiCd-Batterien verwendbar, da diese Batterien bei relativ hohen Ladeströmen ein häufiges Aufladen ermöglichen und infolgedessen in vielen Batteriegeräten verwendet sind.

Weitere Vorteile und Verbesserungen der Erfindung sind der Beschreibung entnehmbar.

### Zeichnung

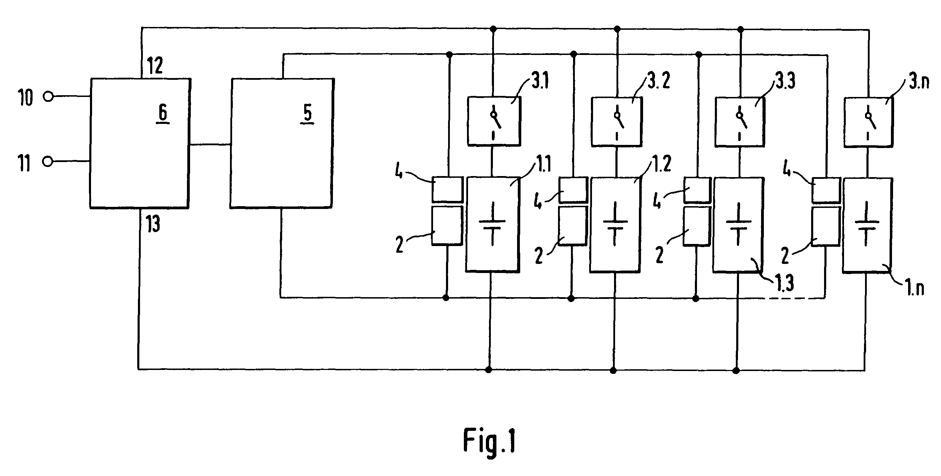

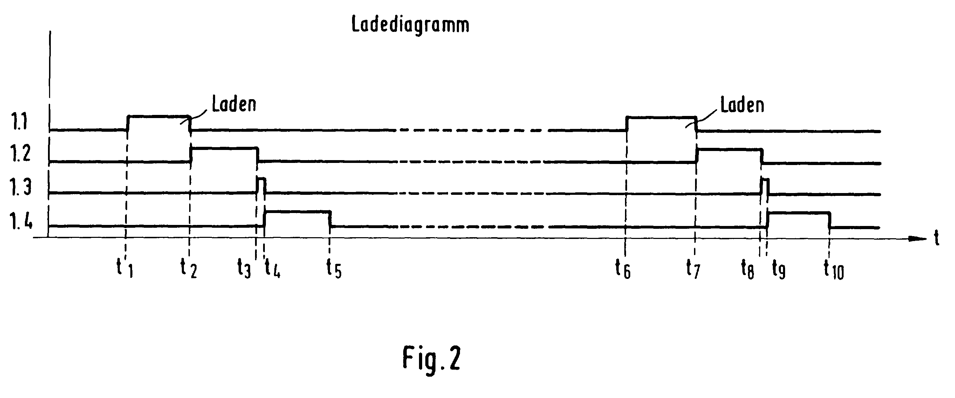

Ein Ausführungsbeispiel der Erfindung ist in der Zeichnung dargestellt und in der nachfolgenden Beschreibung näher erläutert. Es zeigen Figur 1 ein Blockschaltbild des Ladegerätes und Figur 2 ein Ladediagramm zum Aufladen der Batterie.

### Beschreibung des Ausführungsbeispiels

Figur 1 zeigt ein Netzteil 6, das über Anschlüsse 10, 11 mit einer nicht dargestellten Versorgungsspannung, beispielsweise einem Wechselspannungsnetz verbunden ist. Das Netzteil hat per se bekannte Baugruppen wie einen Transformator als Spannungswandler, einen Gleichrichter und einen Spannungsregler oder Stromregler, der den Ladestrom für die Batterien an Klemmen 12, 13 auf einen vorgegebenen Wert begrenzt. An die Ausgangsklemmen 12, 13 sind mehrere Batterieschächte 1.1, 1.2, 1.3, 1.n über Einschalter 3.1, 3.2, 3.3, 3.n. angeschlossen. Die Einschalter 3.1, 3.2, 3.3, 3.n enthalten steuerbare Schalter wie Reetkontakte, Relais oder Halbleiterschalter wie beispielsweise Transistoren oder Thyristoren. Die Einschalter 3.1, 3.2, 3.3, 3.n werden über nicht dargestellte Leitungen von einer Steuerung 5 gesteuert. Die Steuerung 5 ist über Sensoren 2, 4 mit jedem Batterieschacht 1.1, 1.2, 1.3, 1.n verbunden. Der Sensor 2 ist als Temperaturfühler ausgebildet und steht mit der aufzuladenden Batterie in thermischem Kontakt. Der Sensor 4 ist zur Erfassung der Batteriespannung ausgebildet. Die Sensoren sind von der Steuerung 5 über nicht dargestellte Schalter schaltbar, so daß im einfachsten Fall jeder Sensor 2, 4 von der Steuerung 15 aus- oder einschaltbar ist.

In weiterer Ausgestaltung der Erfindung ist vorgesehen, weitere Sensoren wie einen Stromfühler oder einen Drucksensoren zur Messung weiterer Batterieparameter zu verwenden.

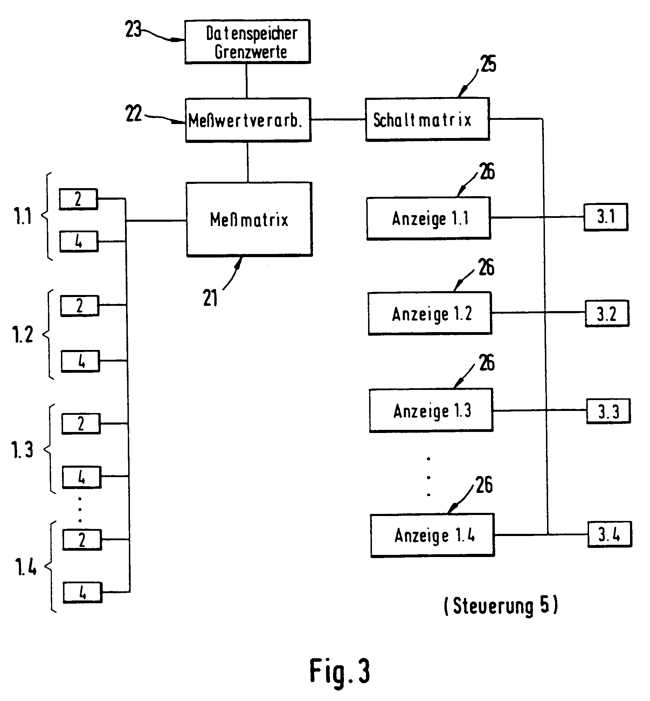

Entsprechend der Figur 3 sind in einer bevorzugten Ausführungsform die Sensoren 2, 4 mit den nicht dargestellten Schaltern mit der Steuerung 5 zusammengefaßt. Dabei werden die Leitungen der Sensoren 2, 4 auf eine Meßmatrix 21 geführt, die mit einer Meßwertverarbeitung 22 verbunden ist. Die Meßmatrix 21 enthält mit jedem Sensor 2, 4 verbundene Schalttransistoren, über die die Meßsignale der Sensoren 2, 4 erfaßt werden. Beispielsweise weist der Sensor 2 einen NTC-Widerstand als Temperaturfühler auf. NTC-Widerstände ändern ihren Widerstandswert in Abhängigkeit von der Temperatur, so daß indirekt durch Messung des Widerstandswertes oder der an ihm abfallenden Spannung die Temperatur der Batterie erfaßt werden kann, da der Sensor einen thermischen Kontakt mit der Batterie hat. Der Sensor 4 kann im einfachsten Fall eine Anschlußklemme an die aufzuladende Batterie aufweisen, so daß die an der Batterie anliegende Spannung über die Meßmatrix 21 der Meßwertverarbeitung 22 zugeführt wird. Die Meßwertverarbeitung 22 vergleicht die Meßwerte mit gespeicherten Grenzwerten des Datenspeichers 23. Die Meßwertverarbeitung 22 kann im einfachsten Fall einen oder mehrere Komparatoren enthalten, in die vorgegebene Grenzwerte für die einzelnen Parameter eingegeben sind. Es ist jedoch auch vorgesehen, zur Steuerung einen Mikrocomputer zu verwenden, der die im Datenspeicher 23 enthaltenen Grenzwerte mit den Meßwerten der Sensoren 2,4 vergleicht.

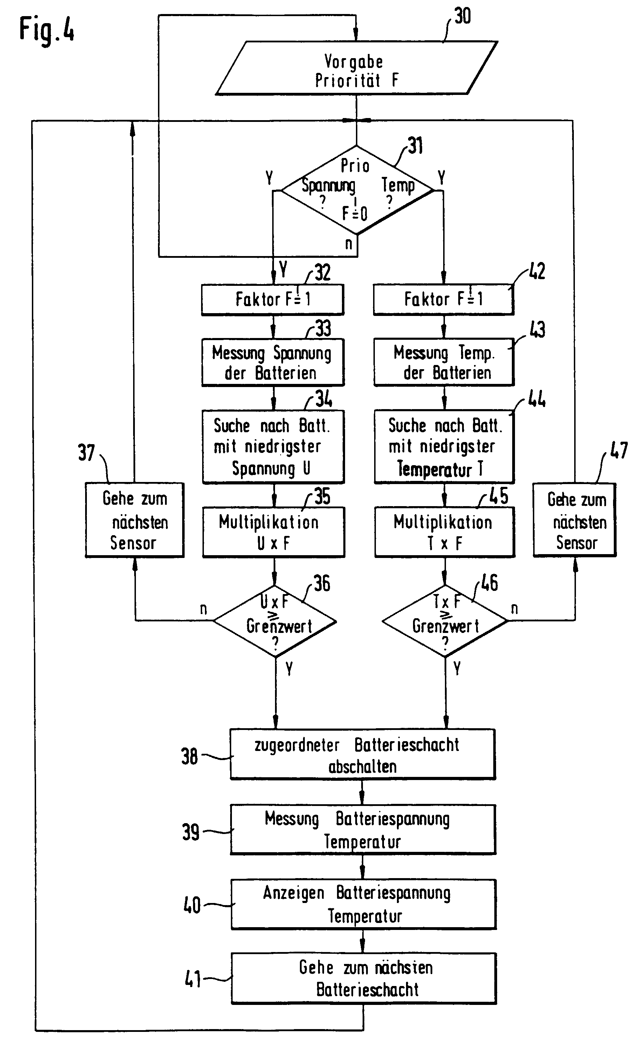

An die Meßwertverarbeitung 22 ist eine Schaltmatrix 25 angeschlossen, an deren Ausgang die Steuereingänge der Einschalter 3.1, 3.2, 3.3, 3.n angeschlossen sind. Desweiteren steuert die Schaltmatrix 25 die den Batterieschächten zugeordneten Anzeigen 26 zur Darstellung der Meßwerte wie Batteriespannung und Temperatur. Für die Steuerung der Meßwertverarbeitung 22 wird ein handelsüblicher Mikrocomputer verwendet, der entsprechende Einrichtungen zum Speichern von Daten, Eingangs- und Ausgangsports aufweist. Er wird mit einem Programm, wie es im Flußdiagramm der Figur 4 dargestellt ist, gesteuert.

Im folgenden wird anhand der Figur 4 die Funktionsweise des Mehrfach-Ladegerätes beschrieben. In Position 30 wird durch die Priorität F vorgegeben, ob beispielsweise die Batteriespannung oder die Temperatur der Batterie bevorzugt ausgewertet werden soll. Die Vorgabe wird erfindungsgemäß mit einem einfachen Schalter wahlweise vorgegeben, so daß sie im Einzelfall änderbar ist. Sie kann aber auch fest vorgegeben werden, um eine bestimmte Eigenschaft des Ladegerätes, insbesondere die Schnelladefunktion zu gewährleisten.

Die Steuerung 5 fragt nun in Position 31 ab, welchem Parameter die Priorität gegeben wird. Wird beispielsweise keine Priorität ausgewählt, dann springt das Programm über die Schleife zurück zur Vorgabe in Position 30. Wird dagegen der Spannungsmessung die Priorität eingeräumt, dann springt das Programm auf Position 32 und setzt den Prioritätsfaktor F=1. In Position 33 wird die Batteriespannung gemessen und in Position 34 wird dann aus den zu ladenden Batterien diejenige ausgesucht, die die niedrigste Spannung aufweist. Ist diese Batterie gefunden, wird in Position 35 der Spannungswert U dieser Batterie mit dem Prioritätsfaktor F=1 multipliziert. In Abfrage 36 wird überprüft, ob der vorgegebene Grenzwert, der in dem Datenspeicher 23 abgelegt ist, erreicht oder überschritten ist. Ist das nicht der Fall, dann wird in Position 37 mittels der Meßmatrix 21 der nächste Sensor eingeschaltet und diese Schleife beginnt wieder in Position 31 mit der Abfrage der Priorität, die zwischenzeitlich geändert worden sein kann.

Wurde dagegen der Grenzwert überschritten, d.h. die vorgegebene Ladespannung der Batterie ist erreicht, dann wird in Position 38 diese Batterie abgeschaltet. Der Ladevorgang für diese Batterie ist dann beendet. In Position 39 wird für Kontrollzwecke die Batteriespannung und/oder die Temperatur der Batterie gemessen und in Position 40 angezeigt. Danach springt das Programm in Position 41 zum nächsten Batterieschacht, und das Programm startet in Position 31 wieder von vorne. Ist im nächsten Batterieschacht keine Batterie vorhanden, dann wird der übernächste Batterieschacht angewählt usw.

Wurde jedoch die Temperatur als Prioritätsparameter in Position 30 vorgegeben, dann erfolgt wieder die Abfrage in Position 31 und anlog zum zuvor beschriebenen Vorgang folgt in Position 42 die Festlegung des Faktors F=1. In Position 43 erfolgt die Temperaturmessung der Batterien und in Position 44 wird die Batterie mit der niedrigsten Temperatur T aufgesucht und der Ladevorgang mit dieser Batterie begonnen. In Position 45 wird das Meßergebnis dieser Batterie mit dem Multiplikationsfaktor multipliziert und in Position 46 wird abgefragt, ob der vorgegebene Grenzwert überschritten ist. Es dies nicht der Fall, dann wird über Position 47 der nächste Sensor angesteuert und die Prozedur beginnt in Position 31 von neuem. Wird dagegen der Grenzwert überschritten, dann wird in Position 38 der Batterieschacht abgeschaltet. Anschließend werden die Positionen 39 bis 41 durchlaufen, wie zuvor beschrieben wurde.

Der Prioritätsfaktor F kann eine beliebige Zahl einnehmen und wird zweckmäßigerweise so gewählt, daß eine möglichst einfache Datenverarbeitung möglich ist.

In Figur 2 ist ein Ladediagramm dargestellt, bei dem die zyklischen Lade- und Pausenzeiten erkennbar sind. Auf der Ordinate des Diagramms sind übereinander für die einzelnen Batterieschächte die Ladefunktionen (Spannung ist ein- bzw. ausgeschaltet) dargestellt. Beispielsweise wird der Batterieschacht 1.1 zum Zeitpunkt tl eingeschaltet und die Batterie in ihm bis zum Zeitpunkt t2 geladen. Zum Zeitpunkt t2 hat beispielsweise die Temperatur T ihren Grenzwert überschritten, so daß dieser Batterieschacht gemäß der Figur 4 (Position 38) abgeschaltet wird. Anschließend wird zum Zeitpunkt t2 der Batterieschacht 1.2 eingeschaltet, bis er zum Zeitpunkt t3 ebenfalls abgeschaltet wird. Danach wird zum Zeitpunkt t4 der Batterieschacht 1.3 kurz eingeschaltet und im Zeitpunkt t4 sofort wieder abgeschaltet, nachdem erkannt wurde, daß keine Batterie in dem Batterieschacht steckt. Es wird dann auf den nächsten Batterieschacht 1.n umgeschaltet und dessen Batterie geladen, bis sie zum Zeitpunkt t5 ebenfalls abgeschaltet wird. Dieser Zyklus wiederholt sich dann vom Zeitpunkt t6 bis t10, da sich zwischenzeitlich die im Schacht 1.1 befindliche Batterie wieder so weit abgekühlt hat, daß sie zum Zeitpunkt t6 wieder eingeschaltet werden kann. Entsprechendes erfolgt mit den anderen Batterien. Hat jede Baterie ihre Sollspannung erreicht, dann wird der Ladevorgang ganz abgeschaltet oder auf Ladeerhaltung umgeschaltet.

Wunschgemäß können auf diese Weise beliebig viele Batterien geladen werden. In weiterer Ausgestaltung der Erfindung lassen sich jedoch die Batterien auch parallel laden, wobei gegebenenfalls entsprechende Regler zur Regelung des Ladestromes der einzelnen Batterien vorzusehen sind und für eine Schnelladung der Ladestrom entsprechend erhöht werden muß.

In weiterer Ausgestaltung der Erfindung ist vorgesehen, außer den beschriebenen Parametern Batteriespannung oder Batterietemperatur auch andere Parameter wie die Stromaufnahme einer Batterie, Entladestrom oder ähnliche Parameter nach dem vorgeschlagenen Ablauf zu verwenden.

## Patentansprüche

1. Ladegerät mit schaltbaren Anschlüssen zum Wiederaufladen von Batterien und mit einer Steuerung zur Überwachung des Ladezustandes der Batterien, wobei die zu ladenden Batterien mit wenigstens zwei Sensoren (2, 4) zur Erfassung ihrer Parameter verbindbar sind, daß die Steuerung (5) die Meßwerte der Sensoren (2, 4) einer Batterie mit einem Prioritätsfaktor wichtet, dann mit vorgegebenen Grenzwerten dieser Batterie vergleicht und bei Über- oder Unterschreitung des vorgegebenen Grenzwertes den Ladevorgang dieser Batterie unterbricht, dadurch gekennzeichnet, daß mehrere Batterieschächte für die Aufnahme von Batterien vorsehbar sind und daß das Ladegerät einen Schalter aufweist, mit dem ein Parameter für die Festlegung der Priorität (F) auswählbar ist.

2. Ladegerät nach Anspruch 1, dadurch gekennzeichnet, daß das Ladegerät die Batterien in den Batterieschächten (1.1, 1.2, 1.3, 1.n) parallel versorgt, daß die Steuerung (5) sequentiell die einzelnen Batterieparameter abfragt und bei Über- oder Unterschreitung der vorgegebenen Grenzwerte die betreffende Batterie abschaltet.

3. Ladegerät nach einem der vorhergehende Ansprüche, dadurch gekennzeichnet, daß die Steuerung (5) bei einem nicht belegten Batterieschacht (1.1, 1.2, 1.3, 1.n) die Ladespannung abschaltet.

4. Ladegerät nach einem der vorhergehenden Ansprüche, dadurch gekennzeichnet, daß die Sensoren (2, 4) als Parameter die Batteriespannung (U) und/oder die Batterietemperatur (T) erfassen.

5. Ladegerät nach Anspruch 4, dadurch gekennzeichnet, daß die Steuerung 5 den Ladevorgang mit der kältesten Batterie startet.

6. Ladegerät nach Anspruch 4 oder 5, dadurch gekennzeichnet, daß die Steuerung 5 den Ladevorgang mit der Batterie beginnt, die die niedrigste Spannung aufweist.

7. Ladegerät nach einem der vorhergehenden Ansprüche, dadurch gekennzeichnet, daß das Ladegerät ein Schnelladegerät ist wobei die Ladezeit für eine Batterie im Minutenbereich liegt.

8. Ladegerät nach einem der vorhergehenden Ansprüche, dadurch gekennzeichnet, daß das Ladegerät als Taschengerät ausgebildet und portabel ist.

9. Ladegerät nach einem der vorhergehenden Ansprüche, dadurch gekennzeichnet, daß das Ladegerät für jeden Batterieschacht (1.1, 1.2, 1.3, 1.n) getrennte Anzeigen für die erfaßten Parameter aufweist.

10. Ladegerät nach einem der vorhergehenden Ansprüche, dadurch gekennzeichnet, daß das Ladegerät zum Laden von NiCd-Batterien verwendbar ist.

## Claims

1. Charging apparatus having switchable connections for recharging batteries and having a controller for monitoring the charge state of the batteries, the batteries to be charged being connectable to at least two sensors (2, 4) in order to detect their parameters, in that the controller (5) weights the measurements of the sensors (2, 4) of a battery with a priority factor, then compares them with predetermined limit values of this battery, and interrupts the charging process of this battery if the values exceed or fall below the predetermined limit value, characterised in that a plurality of battery compartments can be provided for holding batteries and in that the charging apparatus has a switch with which a parameter for defining the priority (F) can be selected.

2. Charging apparatus according to Claim 1, characterised in that the charging apparatus supplies the batteries in the battery compartments (1.1, 1.2, 1.3, 1.n) in parallel, in that the controller (5) sequentially interrogates the individual battery parameters and disconnects the relevant battery if the values exceed or fall below the predetermined limit values.

3. Charging apparatus according to one of the preceding claims, characterised in that the controller (5) disconnects the charge voltage in the event of a battery compartment (1.1, 1.2, 1.3, 1.n) not being occupied.

4. Charging apparatus according to one of the preceding claims, characterised in that the sensors (2, 4) detect the battery voltage (U) and/or the battery temperature (T) as parameters.

5. Charging apparatus according to Claim 4, characterised in that the controller 5 commences the charging process with the coldest battery.

6. Charging apparatus according to Claim 4 or 5, characterised in that the controller 5 commences the charging process with the battery which has the lowest voltage.

7. Charging apparatus according to one of the preceding claims, characterised in that the charging apparatus is a rapid charging apparatus, the charging time for one battery being in the minutes range.

8. Charging apparatus according to one of the preceding claims, characterised in that the charging apparatus is constructed as a pocket apparatus and is portable.

9. Charging apparatus according to one of the preceding claims, characterised in that the charging apparatus has separate displays for the detected parameters for each battery compartment (1.1, 1.2, 1.3, 1.n).

10. Charging apparatus according to one of the preceding claims, characterised in that the charging apparatus can be used for charging NiCd batteries.

## Revendications

1. Chargeur multiple comportant des branchements commutables pour recharger des batteries ainsi qu'une commande surveillant l'état de charge des batteries, les batteries à charger pouvant être reliées à au moins deux capteurs (2, 4) pour détecter leur paramètre et la commande (5) pondère les valeurs de mesure des capteurs (2, 4) d'une batterie avec un coefficient de priorité puis les compare à des valeurs limites prédéterminées pour cette batterie et en cas de dépassement vers le haut ou vers le bas des valeurs limites prédéterminées cette commande interrompt l'opération de charge de cette batterie,
caractérisé en ce qu'
il comporte plusieurs logements à batteries pour recevoir des batteries et l'appareil comporte un commutateur permettant de sélectionner un paramètre pour fixer la priorité (F).

2. Chargeur selon la revendication 1,
caractérisé en ce qu'
il alimente en parallèle les batteries dans les logements à batteries (1.1, 1.2, 1.3, 1.n), la commande (5) interrogeant séquentiellement les différents paramètres de batteries et en cas de dépassement vers le haut ou vers le bas des valeurs limites prédéterminées, il coupe la batterie correspondante.

3. Chargeur selon l'une des revendications précédentes,
caractérisé en ce que
la commande (5) coupe la tension de charge lorsqu'un logement à batteries (1.1, 1.2, 1.3, 1.n) n'est pas occupé.

4. Chargeur selon l'une des revendications précédentes,
caractérisé en ce que
les capteurs (2, 4) détectent comme paramètres, la tension de batterie (U) et/ou la température de batterie (T).

5. Chargeur selon la revendication 4,
caractérisé en ce que
la commande (5) démarre l'opération de charge sur la batterie la plus froide.

6. Chargeur selon la revendication 4 ou 5,
caractérisé en ce que
la commande (5) commence l'opération de charge avec la batterie présentant la tension la plus basse.

7. Chargeur selon l'une des revendications précédentes,
caractérisé en ce qu'
il s'agit d'un chargeur rapide, le temps de charge d'une batterie étant du domaine des minutes.

8. Chargeur selon l'une quelconque des revendications précédentes,
caractérisé en ce que
le chargeur est un chargeur de poche portatif.

9. Chargeur selon l'une quelconque des revendications précédentes,
caractérisé en ce que
le chargeur comporte des affichages séparés pour chaque logement de batteries (1.1, 1.2, 1.3, 1.n), pour les paramètres détectés.

10. Chargeur selon l'une des revendications précédentes,
caractérisé en ce qu'
il est applicable au chargement de batteries NiCd.
